# EUROPEAN PATENT APPLICATION

(11) **EP 4 661 172 A1**
(43) Date of publication of application: **10.12.2025**
(21) Application number: 24749803.3
(22) Date of filing: 30.01.2024
(51) Int. Cl.: H01M 50/198, H01M 50/178, H01M 50/184, H01M 50/186, H01M 50/193, H01M 50/197

(54) **SEALING FILM, METAL TERMINAL, BATTERY, AND DEVICE**

(30) Priority: 03.02.2023 JP 2023015241; 18.01.2024 JP 2024006163
(71) Applicant: ZACROS Corporation, Tokyo 112-0002 (JP)
(72) Inventor: SAITO, Soshi, Tokyo 112-0002 (JP); KANEDA, Yasuhiro, Tokyo 112-0002 (JP)
(74) Representative: Godemeyer Blum Lenze Patentanwälte Partnerschaft mbB - werkpatent
(86) International application number: PCT/IB2024/050827
(87) International publication number: WO 2024/161293

(57) **Abstract**

The present invention relates to a sealing film for sealing between an electrode lead wire and a housing container, in which the sealing film has high adhesive strength, excellent heat resistance and dimensional stability, and high durability against an electrolyte; a metal terminal; a battery; and a device. More specifically, the present invention relates to a sealing film for sealing between an electrode lead wire electrically connected to a battery main body and a housing container housing the battery main body, in which the sealing film has an adhesive layer containing an acid-modified polypropylene resin at a surface on a side to be bonded to the electrode lead wire, the adhesive layer has a thickness of 30 um or less, and the adhesive layer has an elastic modulus of 1000 MPa or more and does not have a solidification point peak in a range of 90 to 110°C in measurement with a differential scanning calorimeter (DSC); a metal terminal; a battery; and a device.

## Description

### TECHNICAL FIELD

The present invention relates to a sealing film, a metal terminal, a battery, and a device.

### BACKGROUND ART

As a storage battery for storing electric energy, a secondary battery such as a lithium ion battery has attracted attention. As this type of secondary battery, a structure in which a battery main body is housed in a container and in which an electrode lead wire is drawn outside the container is known.

For example, Patent Literature 1 describes that an adhesive film interposed between a metal terminal and a packaging material includes an acid-modified polypropylene layer and a polypropylene layer that is not acid-modified. More specifically, it is disclosed that the acid-modified polypropylene layer has a thickness of 16 µm or more, the polypropylene layer that is not acid-modified has a thickness of 30 µm or more, a sea-island structure is observed in a cross section of the acid-modified polypropylene layer with an electron microscope, and a melting peak is observed in a range of 120 to 156°C.

### CITATION LIST

### Patent Literature

Patent Literature 1: Japanese Patent No. 6706014

### SUMMARY OF INVENTION

### TECHNICAL PROBLEM

The present invention has been made in view of the above circumstances, and it is an objective of the present invention to provide: a sealing film for sealing between an electrode lead wire and a housing container, in which the sealing film has high adhesive strength, excellent heat resistance and dimensional stability, and high durability against an electrolyte; a metal terminal; a battery; and a device.

### SOLUTION TO PROBLEM

In order to solve the above problem, the present invention provides a sealing film for sealing between an electrode lead wire electrically connected to a battery main body and a housing container housing the battery main body, in which the sealing film has an adhesive layer containing an acid-modified polypropylene resin at a surface on a side to be bonded to the electrode lead wire, the adhesive layer has a thickness of 30 µm or less, and the adhesive layer has an elastic modulus of 1000 MPa or more and does not have a solidification point peak in a range of 90 to 110°C in measurement with a differential scanning calorimeter (DSC).

The adhesive layer preferably has no melting peak in the range of 125 to 155°C.

The adhesive layer preferably has a thickness of 25 µm or less.

The acid-modified polypropylene resin preferably contains an acid-modified block polypropylene resin.

The acid-modified polypropylene resin preferably further contains an acid-modified homopolypropylene resin.

It is preferable that the sealing film has a polyolefin resin layer laminated on the adhesive layer, and the polyolefin resin layer has a thickness of 30 µm or more and 1000 µm or less.

The polyolefin resin layer preferably has a random polypropylene resin layer and a block polypropylene resin layer.

The polyolefin resin layer preferably has two random polypropylene resin layers and a block polypropylene resin layer present between the two random polypropylene resin layers.

The ratio between the total thickness of the two random polypropylene resin layers and the total thickness of the block polypropylene resin layer is preferably in the range of 2:1 to 1:2.

The present invention also provides a metal terminal in which the sealing film is mounted on a part of a surface of the metal terminal.

Furthermore, the present invention provides a battery having the metal terminal.

Furthermore, the present invention provides a device using the battery as a power source.

### ADVANTAGEOUS EFFECTS OF INVENTION

According to the present invention, it is possible to provide a sealing film for sealing between an electrode lead wire and a housing container, in which the sealing film has high adhesive strength, excellent heat resistance and dimensional stability, and high durability against an electrolyte.

### BRIEF DESCRIPTION OF DRAWINGS

Fig. 1 is a cross-sectional view illustrating an example of a sealing film of the present embodiment.
Fig. 2 is a perspective view illustrating an example of an electrode lead wire member.
Fig. 3 is a perspective view illustrating an example of a battery.
Fig. 4 is a graph illustrating DSC measurement results of an adhesive layer used in Example 1.
Fig. 5 is a graph illustrating DSC measurement results of an adhesive layer used in Example 2.
Fig. 6 is a graph illustrating DSC measurement results of an adhesive layer used in Comparative Example 1.
Fig. 7 is a graph illustrating DSC measurement results of an adhesive layer used in Comparative Example 2.

### DESCRIPTION OF EMBODIMENTS

Hereinafter, the present invention will be described based on preferred embodiments.

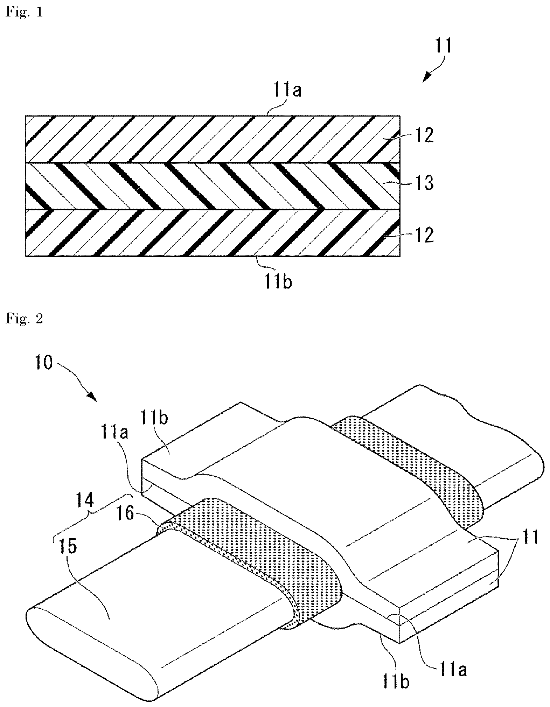

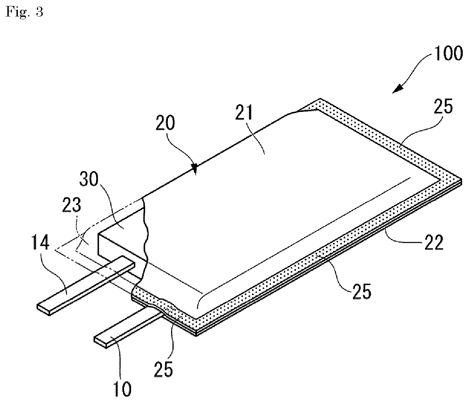

Fig. 1 illustrates an example of a sealing film of the present embodiment. Fig. 2 illustrates an example of an electrode lead wire member. Fig. 3 illustrate an example of a battery. These drawings explain the concept, and dimensions, ratios, and the like of the components may be different from actual ones.

As illustrated in Fig. 3, a battery 100 includes a battery main body 30 serving as a power generating element, a housing container 20 housing the battery main body 30, and an electrode lead wire 14 electrically connected to the battery main body 30. As illustrated in Fig. 2, sealing films 11 are provided on both sides of the electrode lead wire 14 in the thickness direction.

An electrode lead wire member 10 is an example of a metal terminal in which the sealing films 11 are each mounted on a part of a surface of the metal terminal. The battery 100 is an example of a battery having the metal terminal. Such a battery 100 can be used as a power source of a device. The device using the battery 100 as a power source is not particularly limited, and various electronic devices can be exemplified.

### <Sealing film>

A sealing film 11 of the present embodiment is used for sealing between an electrode lead wire 14 electrically connected to a battery main body 30 and a housing container 20 housing the battery main body 30.

As shown in Fig. 1, the sealing film 11 may be a laminate having a plurality of layers. The sealing film 11 in the illustrated example has an adhesive layer 12 at least at a surface 11a on a side to be bonded to the electrode lead wire 14. Further, the adhesive layer 12 may be provided at a surface 11b on a side to be bonded to the housing container 20. Although not particularly illustrated, the sealing film 11 may be a single layer film of the adhesive layer 12.

### <Adhesive layer>

An adhesive layer 12 contains an acid-modified polypropylene resin. The adhesive layer 12 preferably contains an acid-modified polypropylene resin as a main component. Specifically, the content of the acid-modified polypropylene resin is preferably 50 mass% or more, more preferably more than 50 mass%, and still more preferably 80 mass% or more with respect to the total mass of the adhesive layer 12.

The adhesive layer 12 is preferably a thermoplastic resin layer. The adhesive layer 12 may contain a resin other than the acid-modified polypropylene resin. Examples of the resin other than the acid-modified polypropylene resin include polyolefin resins such as polypropylene resins which are not acid-modified, acid-modified polyolefin resins other than the acid-modified polypropylene resin, and thermoplastic elastomers which may be acid-modified or unmodified.

Examples of the acid-modified polypropylene resin include modified polypropylene-based resins having a carboxylic acid or carboxylic anhydride functional group in the molecular structure. For the acid modification of the polypropylene resin, an unsaturated carboxylic acid or an unsaturated carboxylic anhydride can be used as a monomer.

The unsaturated carboxylic acid is not particularly limited, and examples thereof include unsaturated monocarboxylic acids such as acrylic acid, methacrylic acid, crotonic acid, and isocrotonic acid; unsaturated dicarboxylic acids such as maleic acid, fumaric acid, itaconic acid, citraconic acid, tetrahydrophthalic acid, endo-bicyclo[2.2.1]-5-heptene-2,3-dicarboxylic acid (endic acid), and methyl-5-norbornene-2,3-dicarboxylic acid (nadic acid); and unsaturated tricarboxylic acids such as aconitic acid.

The unsaturated carboxylic acid anhydride is not particularly limited, and examples thereof include unsaturated dicarboxylic acid anhydrides such as maleic anhydride, itaconic anhydride, citraconic anhydride, tetrahydrophthalic anhydride, endic anhydride, and nadic anhydride.

The acid-modified polypropylene resin may be a graft polymer obtained by graft-polymerizing a modified monomer to a polypropylene resin that is not acid-modified, or may be a copolymer of an olefin containing at least propylene and the modified monomer. An example of the graft polymerization method is a method of melt-kneading a modified monomer with an unmodified resin in the presence of a radical polymerization initiator such as an organic peroxide or an aliphatic azo compound.

In the present specification, the polypropylene resin may be an acid-modified polypropylene resin or a polypropylene resin that is not acid-modified. The polypropylene resin that is not acid-modified may be a polypropylene resin modified with a functional group (for example, a hydroxyl group or the like) other than an acid or an acid anhydride, or may be a polypropylene resin having no polar functional group.

The polypropylene resin is a resin of which the monomer is mainly composed of propylene. Specifically, the ratio of propylene is preferably 50 mass% or more, more preferably more than 50 mass%, and still more preferably 80 mass% or more with respect to the total mass of the polypropylene resin.

The polypropylene resin may be a homopolymer of propylene or a copolymer containing a monomer other than propylene. Examples of an olefin-based monomer other than propylene include ethylene, 1-butene, isobutylene, 1-hexene, and 1-octene. Examples of the polypropylene resin include a homopolypropylene resin, a propylene-ethylene copolymer, a block polypropylene resin, and a random polypropylene resin.

Specific examples of the acid-modified polypropylene resin include an acid-modified homopolypropylene resin, an acid-modified block polypropylene resin, and an acid-modified random polypropylene resin. An acid-modified block polypropylene resin is preferable because it is excellent in characteristics such as impact resistance. In addition to containing the acid-modified block polypropylene resin, the acid-modified polypropylene resin preferably further contains an acid-modified homopolypropylene resin.

The homopolypropylene resin is a polypropylene resin containing no ethylene component, and is generally known to have high rigidity and heat resistance. The block polypropylene resin is known to have a structure in which an elastomer (EPR) component containing a moiety derived from an ethylene monomer is dispersed in a homopolypropylene component. In addition, the random polypropylene resin is known to contain an ethylene component.

The adhesive layer 12 may contain an additive. The additive of the adhesive layer 12 is not particularly limited, and examples thereof include a stabilizer, an antistatic agent, a coloring material, a filler, and a crosslinking agent.

The thickness of the adhesive layer 12 is preferably 30 µm or less and more preferably 25 µm or less. The thickness of the adhesive layer 12 is preferably 1 µm or more, more preferably 5 µm or more, and still more preferably 10 µm or more.

The elastic modulus of the adhesive layer 12 is preferably 1000 MPa or more, and may be, for example, about 1100 MPa, about 1200 MPa, about 1300 MPa, about 1400 MPa, about 1500 MPa, about 1600 MPa, about 1700 MPa, about 1800 MPa, about 1900 MPa, or about 2000 MPa. In terms of having a high elastic modulus, it is preferable to use an acid-modified polypropylene resin containing a small amount of an elastomer component for the adhesive layer 12.

It is preferable that the adhesive layer 12 does not have a solidification point peak in the range of 90 to 110°C in measurement with a differential scanning calorimeter (DSC). In addition, it is more preferable not to have a melting peak in the range of 125 to 155°C. Therefore, for example, it is preferable to use an acid-modified polypropylene resin containing a small amount of an ethylene component for the adhesive layer 12.

By reducing the ethylene component in the acid-modified polypropylene resin used for the adhesive layer 12, rigidity (elastic modulus) and dimensional stability can be improved, and a decrease in adhesive strength (deterioration of resin) due to an electrolytic solution resistance test can be suppressed. In terms of ensuring adhesive strength, it is preferable that the resin used for the adhesive layer 12 contains an ethylene component to some extent.

The melt flow rate (MFR) of the acid-modified polypropylene resin is preferably 5 to 7 g/10 min. The MFR of the polypropylene resin can be measured, for example, under conditions of 230°C and a load of 2.160 kg.

The yield point strength of the acid-modified polypropylene resin is preferably 10 to 40 MPa. The yield point strength can be measured by a tensile test in the same method as that for the elastic modulus and the breaking strength.

### <Polyolefin resin layer>

As exemplified in Fig. 1, a sealing film 11 has adhesive layers 12 on both surfaces 11a and 11b, and a polyolefin resin layer 13 present between the adhesive layers 12. Although not particularly illustrated, the sealing film may have the adhesive layer 12 at the surface 11a on the electrode lead wire 14 side and the polyolefin resin layer 13 at the surface 11b on the housing container 20 side. The number of the polyolefin resin layers 13 may be two or more.

When the thickness of the adhesive layer 12 is 30 µm or less, the thickness of the polyolefin resin layer 13 is preferably 30 µm or more and 1000 µm or less. When the number of the polyolefin resin layers 13 is two or more, the total thickness of all the polyolefin resin layers 13 is preferably 30 µm or more and 1000 µm or less.

The polyolefin resin layer 13 contains a polyolefin resin. The polyolefin resin layer 13 preferably contains a polyolefin resin as the main component. Specifically, the content of the polyolefin resin is preferably 50 mass% or more, more preferably more than 50 mass%, and still more preferably 80 mass% or more with respect to the total mass of the polyolefin resin layer 13.

The polyolefin resin layer 13 is preferably a thermoplastic resin layer. The polyolefin resin layer 13 may contain a resin other than the polyolefin resin. Examples of the resin other than the polyolefin resin include a copolymer of an olefinic monomer and another monomer, and a thermoplastic elastomer.

In the present specification, the polyolefin resin may be an acid-modified polyolefin resin or a polyolefin resin that is not acid-modified. The polyolefin resin that is not acid-modified may be a polyolefin resin modified with a functional group (for example, a hydroxyl group or the like) other than an acid or an acid anhydride, or may be a polyolefin resin having no polar functional group.

The polyolefin resin is a resin containing an olefin-based monomer as the main component. Specifically, the ratio of the olefin-based monomer is preferably 50 mass% or more, more preferably more than 50 mass%, and still more preferably 80 mass% or more with respect to the total mass of the polyolefin resin.

Examples of the olefin-based monomer include ethylene, propylene, 1-butene, isobutylene, 1-hexene, and 1-octene. Examples of the monomer other than olefin include vinyl esters such as acrylic acid ester, methacrylic acid ester, and vinyl acetate, and vinyl halide monomers such as vinyl chloride.

The polyolefin resin layer 13 preferably contains a polypropylene resin as the main component. As described above, the polypropylene resin may be an acid-modified polypropylene resin or a polypropylene resin that is not acid-modified. Specifically, the ratio of the polypropylene resin is preferably 50 mass% or more, more preferably more than 50 mass%, and still more preferably 80 mass% or more with respect to the total mass of the polyolefin resin layer 13.

When the polyolefin resin layer 13 has two or more layers, it may have at least one random polypropylene resin layer and at least one block polypropylene resin layer. More specifically, the polyolefin resin layer 13 may have two random polypropylene resin layers and a block polypropylene resin layer present between the two random polypropylene resin layers.

The ratio between the thickness of the random polypropylene resin layer (total for two or more layers) and the thickness of the block polypropylene resin layer (total for two or more layers) may be in the range of 2:1 to 1:2.

The polyolefin resin layer 13 may contain an additive. The additive of the polyolefin resin layer 13 is not particularly limited, and examples thereof include a stabilizer, an antistatic agent, a coloring material, a filler, and a crosslinking agent.

### <Electrode lead wire member>

An electrode lead wire member 10 illustrated in Fig. 2 includes an electrode lead wire 14 and a pair of sealing films 11. The electrode lead wire 14 has a lead wire main body 15 and a surface treatment layer 16 formed on a surface of the lead wire main body 15.

The pair of sealing films 11 is disposed such that surfaces 11a on a side to be bonded to the electrode lead wire 14 face each other and sandwich the electrode lead wire 14. The pair of sealing films 11 can be in contact with the entire circumference of the electrode lead wire 14 as a whole.

The lead wire main body 15 has electric conductivity and extends in one direction from an end portion connected to the battery main body 30 to an end portion drawn outside the housing container 20. The shape of the lead wire main body 15 along the length direction may be linear or curved.

The material of the lead wire main body 15 is not particularly limited, and examples thereof include aluminum, copper, nickel, iron, gold, platinum, and an alloy containing at least one of these metals. Aluminum (Al) or copper (Cu) is preferable because aluminum (Al) or copper (Cu) has excellent conductivity and is advantageous in terms of cost. The surface of copper may be plated with nickel (Ni).

The surface treatment layer 16 has corrosion resistance. The term "corrosion resistance" means a property of being hardly corroded by the electrolytic solution inside the battery. As illustrated in Fig. 2, the surface treatment layer 16 is formed at least in a region of the lead wire main body 15 to which the sealing film 11 is bonded. By laminating the surface treatment layer 16 between the lead wire main body 15 and the sealing film 11, peeling of the sealing film 11 from the electrode lead wire 14 can be suppressed.

The surface treatment layer 16 may be formed over the entire region of the surface of the lead wire main body 15. A region where the surface treatment layer 16 is not formed may be provided in a portion where the lead wire main body 15 is drawn out from the housing container 20. In the portion where the lead wire main body 15 is connected to the battery main body 30, the surface treatment layer 16 may be formed, or the surface treatment layer 16 may be omitted. The electrode lead wire 14 may be formed only of the lead wire main body 15 by omitting the surface treatment layer 16 as a whole.

The surface treatment layer 16 is not particularly limited, and an example thereof is an acid-resistant film formed of a material containing a phosphate, a chromate, a fluoride, a triazinethiol compound, or the like. The surface treatment layer 16 may contain a crosslinkable resin.

Specific examples of the surface treatment include, but are not particularly limited to, a chromic acid-based treatment such as a chromate treatment; a non-chromic acid-based treatment such as a zirconium treatment, a triazinethiol treatment, and a zinc phosphate-based treatment; and a hydration oxidation treatment, an anodization treatment, a passivation treatment, and a chemical conversion treatment.

### <Housing container>

A housing container 20 illustrated in Fig. 3 includes a container main body 21 and a container lid 22. At least one of the container main body 21 and the container lid 22 may have a concave molded portion 23 for housing a battery main body 30 by drawing an exterior material. In the illustrated example, the molded portion 23 is formed only in the container main body 21, but the molded portion 23 may be formed in the container lid 22.

The exterior material may be, for example, a laminate having one or more resin layers on each surface of a metal foil. The exterior material may have flexibility such as a laminated film or a laminated sheet that can be wound in a roll shape.

The resin layer used for the exterior material is not particularly limited, and a resin film of a polyamide resin such as nylon, polyester such as polyethylene terephthalate (PET), a polyolefin resin such as polypropylene, or the like is suitable.

The metal foil used for the exterior material is not particularly limited, and an aluminum foil, a stainless foil, a copper foil, an iron foil, or the like is suitable. When the exterior material has the metal foil, a barrier property can be imparted against gases such as water vapor and oxygen. In order to ensure electrical insulation to the metal foil, an insulating material such as a resin layer is laminated.

An arbitrary layer can be interposed between the resin layer and the metal foil of the exterior material as necessary. A surface treatment layer having corrosion resistance may be provided on the surface of the metal foil. The resin layer and the metal foil may be bonded to each other via an adhesive layer. The exterior material may have a printing layer, a coating layer, and the like on the outside of the metal foil.

The exterior material may have two or more resin layers. One or more resin layers may be laminated on the inside of the metal foil. One or more resin layers may be laminated on the outside of the metal foil.

It is preferable that a sealant resin layer is provided on each of the surface of the container main body 21 on the side in contact with the container lid 22 and the surface of the container lid 22 on the side in contact with the container main body 21. In a peripheral edge portion 25, the sealant resin layers of the container main body 21 and the container lid 22 are faced to each other and are thermally fused, so that the housing container 20 can be integrated.

Examples of the resin (sealant resin) used for the sealant resin layer of the housing container 20 include a polyolefin resin such as a polypropylene resin. The sealant resin may be an acid-modified resin or a resin that is not acid-modified.

The housing container 20 is bonded to the electrode lead wire 14 via the sealing film 11. Therefore, it is preferable that the sealant resin layer is provided on the surface of the housing container 20 on the side in contact with the sealing film 11. Furthermore, when the surface 11b of the sealing film 11 on the side to be bonded to the housing container 20 is a polyolefin resin such as a polypropylene resin, heat fusion between the housing container 20 and the sealing film 11 is facilitated, which is preferable.

The inside of the housing container 20 may contain an electrolyte. An example of the battery is a secondary battery such as a lithium ion battery. The electrolyte of the battery may be liquid (electrolytic solution), gel, solid, or the like. The electrolyte may contain a fluorine compound such as LiPF₆, LiBF₄, or LiN(SO₂F)₂.

The electrolyte may contain, as a medium, carbonate esters such as ethylene carbonate (EC), propylene carbonate (PC), dimethyl carbonate (DMC), diethyl carbonate (DEC), and ethyl methyl carbonate (EMC). One type of medium may be contained, or two or more types of media may be contained.

In a case where the electrolyte contains a fluorine compound, moisture entering from the outside of the battery causes the fluorine compound to be decomposed to generate hydrofluoric acid (HF), which may corrode the metal. However, the moisture amount in the battery 100 may gradually increase over time. Therefore, the sealing film 11 is required to have high durability against an electrolyte in addition to adhesive strength. The high durability against an electrolyte can contribute to the longer life and reliability of the battery 100.

Although the present invention has been described based on preferred embodiments, the present invention is not limited to the above-described embodiments, and various modifications can be made without departing from the gist of the present invention. Examples of the modification include addition, replacement, omission, and other modifications of components in each embodiment.

### EXAMPLES

Hereinafter, the present invention will be specifically described with reference to examples.

### <Production of sealing film>

A sealing film (thickness: 80 µm) was produced so as to have a structure of adhesive layer (20 µm)/polyolefin resin layer (block polypropylene, 40 µm)/adhesive layer (20 µm). The adhesive layers of the sealing films according to Example 1 and Comparative Examples 1 to 3 are individually formed of four different acid-modified block polypropylene resins, and the adhesive layer of the sealing film according to Example 2 is formed of a mixed resin of 60 mass% of an acid-modified block polypropylene resin of Example 1 and 40 mass% of an acid-modified homopolypropylene resin.

### <DSC measurement>

DSC measurement of the resin used for the adhesive layer of the sealing film was performed under the following conditions.
- Device: differential scanning calorimeter DSC7020 (manufactured by Hitachi High-Tech Science Corporation)
- Sample cell: aluminum
- Mass of sample resin placed in sample cell: 5.0 mg
- Reference: aluminum oxide
- Mass of reference: 8.080 mg
- Temperature increase rate: 10°C/sec
- Temperature range: 20 to 200°C

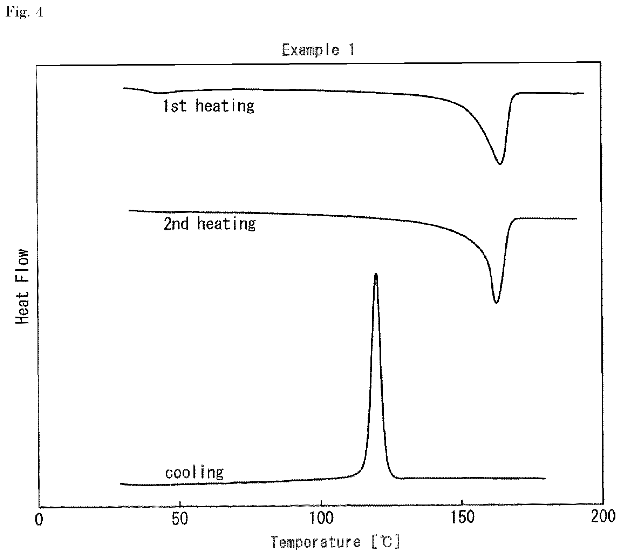

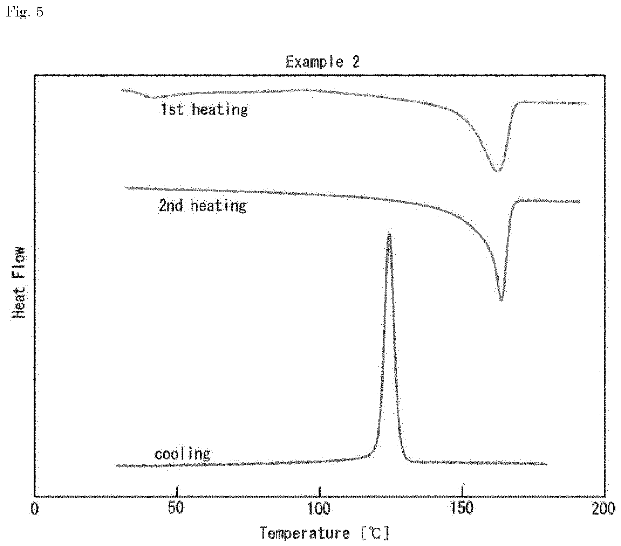

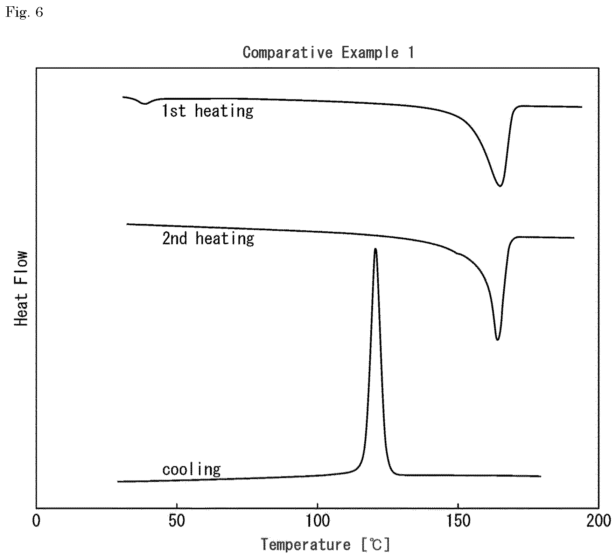

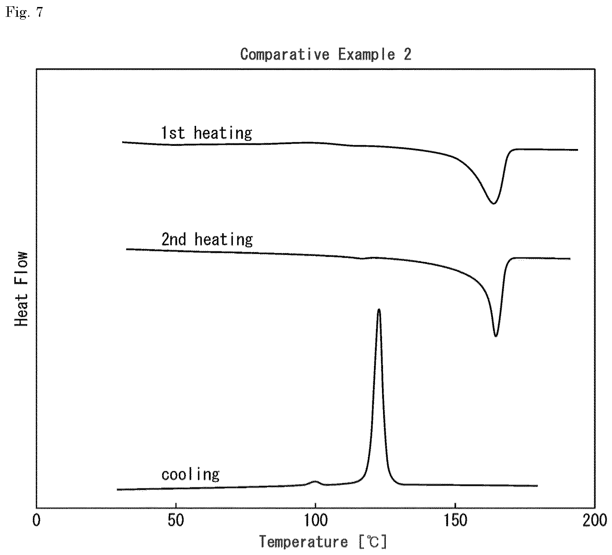

For the presence or absence of a peak around 100°C in a cooling process, it was confirmed whether or not a peak having a height of 1% or more with respect to the maximum peak in the cooling process was present in the range of 90 to 110°C. Figs. 4 to 7 illustrate the results of DSC measurement in Examples 1 and 2 and Comparative Examples 1 and 2. "1st heating" represents an initial heating process, "cooling" represents a cooling process, and "2nd heating" represents a reheating process after cooling.

### <Melt flow rate>

The melt flow rate (MFR) of the resin used for the adhesive layer of the sealing film was measured under the following conditions based on JIS K7210-1:2014 (ISO1133-1:2011).
- Measurement temperature: 230°C
- Preheating time: 5 minutes
- Load: 2.160 kg
- Sampling interval: 20 seconds

### <Tensile test>

The mechanical properties (yield point strength, breaking strength, and elastic modulus) of the resin used for the adhesive layer of the sealing film were evaluated under the following conditions.
- Device: Autograph (registered trademark) AGS-X series (manufactured by Shimadzu Corporation)
- Sample shape: dumbbell type
- Distance between chucks: 75 mm
- Speed: 500 mm/min
- Sampling interval: 10 milliseconds

### <Measurement of dimensional stability>

Under the following conditions, the sealing film was welded to both surfaces of an electrode lead wire (metal plate) to prepare a sample of an electrode lead wire member for measuring dimensional stability.
- Metal plate: aluminum plate (width 45 mm, length 45 mm, thickness 0.4 mm)
- Metal part temperature: 180°C
- Film part temperature: 170°C
- Welding time: 14 seconds
- Cooling time: 10 seconds
- Pressure: 0.2 MPa

Using the prepared sample of the electrode lead wire member, the maximum value of the elongation of the film was measured by image analysis under the following conditions.
- Device: image dimension measuring instrument IM-8000 series (manufactured by Keyence Corporation)

### <Evaluation Results>

The evaluation results are shown in Table 1.

**[Table 1]**

| | Melting point [°C] | Peak around 100°C in cooling process | MFR [g/10 min] | Yield point strength [MPa] | Breaking strength [MPa] | Elastic modulus [MPal | Dimensional stability [%] |
|---|---|---|---|---|---|---|---|
| Example 1 | 164 | Absent | 6.0 | 38 | 57 | 1300 | 11 |
| Example 2 | 164 | Absent | 3.2 | 17 | 56 | 1100 | 11 |
| Comparative Example 1 | 164 | Absent | 1.3 | 25 | 62 | 900 | 12 |
| Comparative Example 2 | 164 | Present | 2.7 | 20 | 52 | 700 | 13 |
| Comparative Example 3 | 140 | Present | 7.0 | 25 | 35 | 1000 | 12 |

In each of the sealing films of Examples 1 and 2 and Comparative Examples 1 and 2, the resin used for the adhesive layer has a melting point of 160°C or higher and is superior in heat resistance to a resin (melting point: 120 to 148°C) used for a known adhesive layer.

In the sealing films of Comparative Examples 2 and 3, a solidification point peak was observed around 100°C due to a moiety derived from ethylene in the elastomer component contained in the acid-modified block polypropylene resin. On the other hand, in the sealing films of Examples 1 and 2 and Comparative Example 1, a solidification point peak around 100°C was not observed.

In the sealing film of Example 1, the elastic modulus of the resin used for the adhesive layer was higher than that of the sealing film of Comparative Example 1. Specifically, the elastic modulus of the resin used for the adhesive layer of Example 1 was 1000 MPa or more, and the elastic modulus of the resin used for the adhesive layer of Comparative Example 1 was less than 1000 MPa. Therefore, it is considered that the resin used for the adhesive layer of Example 1 contains a smaller amount of an elastomer component than the resin used for the adhesive layer of Comparative Example 1.

Furthermore, regarding the dimensional stability, the sealing films of Comparative Examples 1 to 3 had an elongation of 12% or 13% at the maximum, whereas the sealing films of Examples 1 and 2 had an elongation of 11% at the maximum.

### <Preparation (1) of sample>

Under the following conditions, the sealing film was welded to both surfaces of an electrode lead wire (metal plate) to prepare samples of electrode lead wire members of Example 1 and Comparative Examples 1 to 3.
- Metal part temperature: 180°C
- Film part temperature: 170°C
- Welding time: 14 seconds
- Cooling time: 10 seconds
- Pressure: 0.2 MPa

Two types of metal plates, a nickel-plated copper plate (NiCu; width 50 mm, length 45 mm, thickness 0.2 mm) and an aluminum plate (Al; width 45 mm, length 45 mm, thickness 0.4 mm), were used to prepare samples. In each sample, the long side of the sealing film was extended in the width direction of the metal plate, and regions where the pair of sealing films were welded to each other without interposing the metal plate were provided on both sides in the width direction of the metal plate.

### <Measurement (1) of adhesive strength>

Using the prepared sample of the electrode lead wire member, the sealing film was peeled off from the electrode lead wire (metal plate), and the adhesive strength (initial adhesive strength) before an electrolytic solution resistance test was measured, under the following conditions.
- Device: Force gauge FGP-20 (manufactured by NIDEC Drive Technology Corporation)
- Peeling angle: 180°
- Number of data points: 300
- Sampling interval: 10/sec

### <Electrolytic solution resistance test (1)>

Further, the sample of the electrode lead wire member was immersed in an electrolyte, and then the adhesive strength after an electrolytic solution resistance test was measured in the same manner as the adhesive strength before an electrolytic solution resistance test, under the following conditions.
- Electrolyte: lithium ion battery (LiB) grade
   1.6M, LiPF₆, EC:DMC:EMC = 4:3:4 (volume ratio)
- Moisture content in electrolytic solution: 5000 ppm
- Storage environment temperature: 85°C
- Immersion time: 300 hours
- Device: small environment tester SH-642 (manufactured by ESPEC CORP.)

The adhesive strengths before and after immersion are shown in Table 2.

**[Table 2]**

| | Adhesive strength before electrolytic solution resistance test [N/10 min] | | Adhesive strength after electrolytic solution resistance test [N/10 min] | |
|---|---|---|---|---|
| | NiCu | Al | NiCu | Al |
| Example 1 | 17 | 22 | 13 | 20 |
| Comparative Example 1 | 12 | 15 | 6 | 13 |
| Comparative Example 2 | 15 | 17 | 5 | 15 |
| Comparative Example 3 | 17 | 20 | 10 | 15 |

In the sealing films of Comparative Examples 1 to 3, the adhesive strength after an electrolytic solution resistance test was significantly decreased as compared with the adhesive strength before an electrolytic solution resistance test. However, in the sealing film of Example 1, the adhesive strength after an electrolytic solution resistance test was less decreased as compared with the adhesive strength before an electrolytic solution resistance test.

Specifically, when nickel-plated copper was used for the metal plate, the sealing films of Comparative Examples 1 to 3 had a decrease in adhesive strength by an electrolytic solution resistance test of 6 N/mm or more, whereas the sealing film of Example 1 had a decrease in adhesive strength by an electrolytic solution resistance test of 4 N/mm. The rate of a decrease in adhesive strength in each of the sealing films of Comparative Examples 1 to 3 was about 41% or more, whereas that of the sealing film of Example 1 was about 23%.

When aluminum was used for the metal plate, the sealing film of Comparative Example 3 had a decrease in adhesive strength by an electrolytic solution resistance test of 5 N/mm, whereas the sealing film of Example 1 had a decrease in adhesive strength by an electrolytic solution resistance test of 2 N/mm. The rate of a decrease in adhesive strength in each of the sealing films of Comparative Examples 1 to 3 was about 12% or more, whereas that of the sealing film of Example 1 was about 9%.

### <Preparation (2) of sample>

Samples of electrode lead wire members of Examples 1 and 2 were prepared under the same conditions as in <Preparation (1) of sample> except that a copper plate (NiCu; width 50 mm, length 45 mm, thickness 0.2 mm) subjected to a rough nickel-plating treatment, different from the electrode lead wire (metal plate) in <Preparation (1) of sample>, was used.

### <Measurement (2) of adhesive strength>

Using the prepared sample of the electrode lead wire member, the adhesive strength (initial adhesive strength) before an electrolytic solution resistance test was measured under the same conditions as in <Measurement (1) of adhesive strength> described above.

### <Electrolytic solution resistance test (2)>

Further, using the sample of the electrode lead wire member, the adhesive strength after an electrolytic solution resistance test was measured under the same conditions as in <Electrolytic solution resistance test (1)> described above except that the immersion time was set to 168 hours.

The adhesive strengths before and after immersion are shown in Table 3.

**[Table 3]**

| | Adhesive strength before electrolytic solution resistance test [N/10 min] | Adhesive strength after electrolytic solution resistance test [N/10 min] |
|---|---|---|
| | NiCu | NiCu |
| Example 1 | 5.6 | 3.0 |
| Example 2 | 8.4 | 5.2 |

As compared with the sealing film of Example 1 having an adhesive layer containing only an acid-modified block polypropylene resin as an acid-modified polypropylene resin, the sealing film of Example 2 having an adhesive layer containing a mixed resin of 60 mass% of an acid-modified block polypropylene resin of Example 1 and 40 mass% of an acid-modified homopolypropylene resin had improved adhesive strengths before and after an electrolytic solution resistance test. In addition, improvement in film formability and durability against an electrolyte was confirmed by using the mixed resin of the acid-modified block polypropylene resin and the acid-modified homopolypropylene resin as the acid-modified polypropylene resin.

### REFERENCE SIGNS LIST

- 10: Electrode lead wire member
- 11: Sealing film
- 11a: Surface on side to be bonded to electrode lead wire
- 11b: Surface on side to be bonded to housing container
- 12: Adhesive layer
- 13: Polyolefin resin layer
- 14: Electrode lead wire
- 15: Lead wire main body
- 16: Surface treatment layer
- 20: Housing container
- 21: Container main body
- 22: Container lid
- 23: Molded portion
- 25: Peripheral edge portion
- 30: Battery main body
- 100: Battery

## Claims

1. A sealing film for sealing between an electrode lead wire electrically connected to a battery main body and a housing container housing the battery main body, wherein
the sealing film has an adhesive layer containing an acid-modified polypropylene resin at a surface on a side to be bonded to the electrode lead wire,
the adhesive layer has a thickness of 30 µm or less, and
the adhesive layer has an elastic modulus of 1000 MPa or more and does not have a solidification point peak in a range of 90 to 110°C in measurement with a differential scanning calorimeter (DSC).

2. The sealing film according to claim 1, wherein the adhesive layer has no melting peak in a range of 125 to 155°C.

3. The sealing film according to claim 1 or 2, wherein the adhesive layer has a thickness of 25 µm or less.

4. The sealing film according to any one of claims 1 to 3, wherein the acid-modified polypropylene resin contains an acid-modified block polypropylene resin.

5. The sealing film according to claim 4, wherein the acid-modified polypropylene resin further contains an acid-modified homopolypropylene resin.

6. The sealing film according to any one of claims 1 to 5, wherein the sealing film has a polyolefin resin layer laminated on the adhesive layer, and the polyolefin resin layer has a thickness of 30 µm or more and 1000 µm or less.

7. The sealing film according to claim 6, wherein the polyolefin resin layer has a random polypropylene resin layer and a block polypropylene resin layer.

8. The sealing film according to claim 6, wherein the polyolefin resin layer has two random polypropylene resin layers and a block polypropylene resin layer present between the two random polypropylene resin layers.

9. The sealing film according to claim 8, wherein a ratio between a total thickness of the two random polypropylene resin layers and a total thickness of the block polypropylene resin layer is in a range of 2:1 to 1:2.

10. A metal terminal wherein the sealing film according to any one of claims 1 to 9 is mounted on a part of a surface of the metal terminal.

11. A battery comprising the metal terminal according to claim 10.

12. A device using the battery according to claim 11 as a power source.
